# EUROPÄISCHE PATENTSCHRIFT

(11) **EP 2 006 020 B1**
(45) Veröffentlichungstag und Bekanntmachung des Hinweises auf die Patenterteilung: **28.09.2011**
(21) Anmeldenummer: 07011822.9
(22) Anmeldetag: 15.06.2007
(51) Int. Cl.: B01L 3/02, G01N 35/10

(54) **Probenbehandlungsanordnung für eine Flüssigkeitsdosiervorrichtung**
Sample processing arrangement for a liquid metering device
Agencement de traitement d'échantillons pour un dispositif de dosage de liquides

(43) Veröffentlichungstag der Anmeldung: 24.12.2008
(73) Patentinhaber: Hamilton Bonaduz AG, CH-7402 Bonaduz (CH)
(72) Erfinder: Hofstetter, Meinrad, 7012 Felsberg (CH); Oeltjen, Lars, Dr., 7000 Chur (CH)
(74) Vertreter: Trossin, Hans-Jürgen

(56) Entgegenhaltungen:
- EP-A- 0 682 258
- EP-A- 1 614 468
- EP-A- 1 745 851
- WO-A-2004/009238
- DE-A1- 4 421 303

## Beschreibung

Die vorliegende Erfindung betrifft eine Probenbehandlungsanordnung für eine Flüssigkeitsdosiervorrichtung gemäß dem Oberbegriff von Anspruch 1.

Die Probenbehandlungsanordnung umfasst wenigstens einen mit einem Fluid, dessen Druck zur Aufnahme oder Abgabe einer zu dosierenden Flüssigkeit veränderbar ist, gefüllten Hohlraum, der wenigstens eine erste Öffnung aufweist, durch die die zu dosierende Flüssigkeit aufnehmbar oder abgebbar ist, sowie einen Drucksensor, der derart in Verbindung mit dem Hohlraum steht, dass durch den Drucksensor während eines Flüssigkeitsdosierungsvorgangs der Druck des Fluids in dem Hohlraum erfassbar ist.

Das Fluid in dem Hohlraum kann entweder gasförmig oder flüssig sein. In besonders einfachen Fällen kann es sich hierbei um die zu pipettierende Flüssigkeit selbst handeln. In aller Regel wird man jedoch als Fluid ein Gas, z.B. Luft oder Stickstoff verwenden, welches im Betrieb, z.B. je nach Änderung des Volumens des Hohlraums, seinen Druck ändert und dadurch dafür sorgt, dass ein weiteres Fluid, nämlich die zu dosierende Flüssigkeit, entweder während der Aspirationsphase in den Hohlraum eingebracht wird oder während der Dispensationsphase aus dem Hohlraum ausgeschoben wird.

Bei der Flüssigkeitsdosiervorrichtung handelt es sich bevorzugt um eine Pipettiervorrichtung, bei der durch Eintauchen einer Pipettenspitze mit der darin ausgebildeten ersten Öffnung und Erzeugen eines Unterdrucks in dem Hohlraum durch Vergrößern des mit dem Fluid gefüllten Hohlraums zunächst eine bestimmte Menge einer Flüssigkeit in den Hohlraum eingebracht wird (Aspiration) und dann nach Bewegen der Pipette zu in einem vorbestimmten Zielort durch Verkleinern des mit dem Fluid gefüllten Hohlraums ein Überdruck erzeugt wird, der dafür sorgt, dass eine bestimmte Flüssigkeitsmenge wieder durch die erste Öffnung abgegeben wird (Dispensation). Insbesondere soll die Erfindung auf solche Pipettiervorrichtungen anwendbar sein, bei denen der Flüssigkeitsdosierungsvorgang weitgehend automatisiert, d.h. ohne manuelle Eingriffe durch eine Bedienungsperson abläuft.

Es sind im Stand der Technik zahlreiche Anwendungen bekannt, bei denen während eines mittels einer Pipettiervorrichtung durchgeführten Flüssigkeitsdosierungvorgangs der Druck in dem Hohlraum (im Folgenden auch als Pipettierraum bezeichnet) erfasst wird und zur Auswertung bestimmter Kenngrößen bzw. zur Erfassung von Irregularitäten herangezogen wird. Als Beispiel seien hier genannt: EP 1 614 468 A1, gemäß der anhand des Drucks des Fluids im Pipettierraum eine Regelung stattfindet, um zu verhindern, dass während der zwischen Aspirationsphase und Dispensationsphase stattfindenden Transportphase Flüssigkeit durch die erste Öffnung tropft, und EP 1 412 759 B1, gemäß der anhand des Druck-Zeit-Profils im Pipettierraum beurteilt wird, ob während des Pipettiervorgangs Unregelmäßigkeiten (z.B. das Verstopfen der Pipette durch Festkörper) aufgetreten sind. Als letztes Beispiel sei noch die gattungsgemäße EP 1 745 851 A1 genannt, gemäß der anhand des für eine unbekannte Flüssigkeit unter vorbestimmten Prozessgrößen gemessenen Druck-Zeit-Profils aus einer Mehrzahl abgespeicherter Druck-Zeit-Profile für bekannte Flüssigkeiten ein optimaler Satz von Prozessgrößen zum Pipettieren der unbekannten Flüssigkeit abgeleitet werden soll.

Alle diese Anwendungen erfordern es, den Druck in dem mit Fluid gefüllten Hohlraum während des Flüssigkeitsdosierungsvorgangs zu bestimmen und auszuwerten. Dies setzt jedoch voraus, dass Vorrichtungen zur Erfassung dieses Drucks vorhanden und geeignet angeordnet sind. Dies ist insbesondere dann schwierig, wenn eine Mehrzahl von Flüssigkeitsdosiereinheiten, die jeweils zur unabhängigen und separaten Dosierung einer Flüssigkeit vorgesehen sind (beim Pipettieren wird häufig von "Pipettierkanal" gesprochen), an einem gemeinsamen Träger angeordnet werden sollen, wie es gerade im biochemischen Bereich zu Reihenuntersuchungen häufig gewünscht wird.

Aufgabe der vorliegenden Erfindung ist es, eine Probenbehandlungsanordnung anzugeben, bei der eine Erfassung des Drucks in dem mit einem Fluid gefüllten Hohlraum während eines Flüssigkeitsdosierungsvorgangs auf möglichst einfache und platzsparende Weise möglich ist.

Diese Aufgabe wird bei einer Probenbehandlungsanordnung der eingangs genannten Art mit allen Merkmalen des Anspruchs 1.

Der Hohlraum kann bei der erfindungsgemäßen Anordnung klein gehalten werden. Vergrößerungen des Hohlraums, etwa in der Art von Ausstülpungen, zur Aufnahme des Drucksensors sind im Wesentlichen nicht erforderlich. Der Hohlraum wird in der Regel länglich und derart ausgebildet sein, dass seine Größe zur Erzeugung eines Unterdrucks oder Überdrucks in Richtung seiner Längsachse veränderbar ist. Diese Ausbildung spart Platz und gestattet es, nebeneinander viele voneinander separate Hohlräume anzuordnen. Damit können eine Mehrzahl von voneinander unabhängigen Flüssigkeitsdosiereinheiten an einer gemeinsamen Probenbehandlungsanordnung vorgesehen werden. Durch die erfindungsgemäße Anordnung des Drucksensors der ersten Öffnung gegenüberliegend, d.h. im Wesentlichen bezogen auf eine Achse des Hohlraums der ersten Öffnung gegenüberliegend, wird bezogen auf eine Fläche einer Trägervorrichtung der Probenbehandlungsanordnung, an der Flüssigkeitsdosiereinheiten gehalten sind, durch den zusätzlichen Drucksensor bzw. die zusätzlichen Drucksensoren kaum mehr Platz beansprucht.

Der Drucksensor ist außerdem von der ersten Öffnung, und damit von einer in der Regel zur Einwegbenutzung vorgesehenen und von der Probenbehandlungsvorrichtung abnehmbaren Pipettenspitze verhältnismäßig weit entfernt. Auch dies hilft, dass die Funktion des Drucksensors von dem Anbringen/Abnehmen der Pipettenspitze unabhängig ist. Außerdem steht somit für die-Anordnung von für den Drucksensor erforderlicher Steuer- oder/und Auswerteelektronik ausreichend Raum zur Verfügung, weil die Mechanik zum Anbringen oder Abnehmen der Pipettenspitze verhältnismäßig weit entfernt angreift.

Da der Drucksensor selbst in einer in dem Hohlraum ausgebildeten zweiten Öffnung sitzt und diese fluiddicht verschließt, steht für den Sensor eine große Messfläche zur Verfügung. Die Größe der zweiten Öffnung braucht daher nicht allzu groß zu sein, was Platz für den Drucksensor spart und außerdem hilft, Totvolumina zu vermeiden, die ggfs. das Messergebnis des Drucksensors verfälschen können.

Es ist bei der erfindungsgemäßen Anordnung des Drucksensors ohne Weiteres möglich, eine Mehrzahl von Hohlräumen mit je einer entsprechenden ersten Öffnung vorzusehen, wobei jedem der Hohlräume ein mit diesem in Verbindung stehender Drucksensor zugeordnet ist. Es kann sogar jeder der Hohlräume eine zweite Öffnung aufweisen, die durch einen dem Hohlraum zugeordneten Drucksensor verschlossen ist. Jede der einzelnen Flüssigkeitsdosiereinheiten verfügt damit über einen eigenen nur ihr zugeordneten Drucksensor, so dass die Erfassung des Drucks in dem Hohlraum schnell und ungestört von den anderen Flüssigkeitsdosiereinheiten erfolgen kann.

Vorzugsweise sind bei Mehrfach-Probenbehandlungsanordnungen der genannten Art die Hohlräume nebeneinander in zueinander orthogonalen Reihen und Spalten angeordnet, wobei die ersten Öffnungen zweier entlang einer Reihe oder/und Spalte benachbarter Hohlräume jeweils denselben Abstand voneinander aufweisen. Solche Anordnungen können beispielsweise 96 einzelne Flüssigkeitsdosiereinheiten in einer Anordnung mit 8 Flüssigkeitsdosiereinheiten in einer Reihe nebeneinander und 12 dieser Reihen untereinander umfassen. Alternativ sind Anordnungen mit 384 einzelnen Flüssigkeitsdosiereinheiten in einer Anordnung mit 12 Flüssigkeitsdosiereinheiten in einer Reihe nebeneinander und 32 dieser Reihen untereinander oder Anordnungen mit 1536 einzelnen Flüssigkeitsdosiereinheiten in einer Anordnung mit 32 Flüssigkeitsdosiereinheiten in einer Reihe nebeneinander und 48 dieser Reihen untereinander möglich.

Erfindungsgemäß ist der Hohlraum wenigstens zum Teil gebildet durch ein Zylinderelement und ein in das Zylinderelement von dessen einem Stirnende her eingesetztes und relativ zu dem Zylinderelement bewegliches Kolbenelement, wobei die erste Öffnung an dem dem einen Stirnende gegenüber liegenden anderen Stirnende des Zylinderelementes ausgebildet ist. Auf diese Weise ist eine Flüssigkeitsdosiereinheit gebildet, welche zur Aufnahme oder/und Abgabe der zu dosierenden Flüssigkeit in der Art einer Kolben-Zylinderanordnung-arbeitet. Solche Kolben-Zylinderanordnungen besitzen eine ausgeprägte längliche Gestalt mit einer in Richtung der Längsachse des Zylinderelementes verlaufenden Längsachse, wobei das Kolbenelement ebenfalls in Richtung der Längsachse relativ zu dem Zylinderelement beweglich ist. Die Öffnung zur Aufnahme bzw. Abgabe der zu dosierenden Flüssigkeit ist an dem anderen Ende des Zylinderelements, d.h. an dem von dem Kolbenelement abgewandten Boden des Zylinderelementes und damit an einer der Stirnseiten der Kolben-Zylinderanordnung ausgebildet. Vorzugsweise befindet sich gemäß der vorliegenden Erfindung bei einer solchen Anordnung der Drucksensor an einer der ersten Öffnung bezüglich der Längsachse der Kolben-Zylinderanordnung gegenüber liegenden Stirnseite.

Das Kolbenelement ist weiter erfindungsgemäß vorzugsweise als Hohlkolben ausgebildet mit einem das Kolbenelement durchsetzenden Durchgang, der an dem dem anderen Stirnende des Zylinderelementes zugewandten einen Stirnende des Kolbenelementes der ersten Öffnung gegenüber liegend in einen ersten Teilhohlraum mündet. Der Durchgang kann dann gemäß eines ersten erfindungsgemäßen Alternative an dem von dem anderen Stirnende des Zylinderelementes abgewandten anderen Stirnende des Kolbenelementes der zweiten Öffnung gegenüber liegend in einen zweiten Teilhohlraum münden. Es kann gemäß eines zweiten erfindungsgemäßen Alternative auch vorgesehen sein, dass das von dem anderen Stirnende des Zylinderelementes abgewandte andere Stirnende des Durchgangs die zweite Öffnung ausbildet.

Die zweite Öffnung kann sich beispielsweise an einem der Stirnenden des Kolbenelementes befinden, wobei ggfs der Drucksensor wenigstens teilweise in eine Vertiefung an dem Stirnende des Kolbenelementes eingesetzt sein kann. Sowohl das eine, der ersten Öffnung zugewandte Stirnende als auch bevorzugt das am anderen Ende des Kolbenelements befindliche Stirnende kommen hierfür in Frage.

Der Durchgang verläuft vorzugsweise konzentrisch zur Längsachse des Kolbenelementes, so dass das Kolbenelement in einfacher Weise als Röhre ausgebildet sein kann, wobei ein geschlossener, vorzugsweise zylinderförmiger Mantel den Durchgang umschließt.

In einer bevorzugten Ausführungsform ist das Kolbenelement an einer relativ zu dem Zylinderelement bewegbaren Trägervorrichtung befestigt, wobei die Trägervorrichtung eine erste Trägerplatte umfasst, an der das Kolbenelement mit im Wesentlichen orthogonal zur Ebene der ersten Trägerplatte stehender Längsachse angebracht ist. Vorzugsweise ist das Kolbenelement, ggfs. über ein Aufnahmeelement, in eine entsprechende Aussparung oder Vertiefung an der Trägerplatte eingesetzt.

Die Trägervorrichtung kann darüber hinaus noch eine zweite Trägerplatte umfassen, die im Wesentlichen parallel zu der ersten Trägerplatte angeordnet ist und mit dieser unter Bildung eines Zwischenraumes verbunden ist, wobei der Drucksensor wenigstens teilweise in dem zwischen der ersten Trägerplatte und der zweiten Trägerplatte ausgebildeten Zwischenraum untergebracht ist. Diese Ausführungsform schafft im Zwischenraum zwischen den Trägerplatten besonders viel Platz, der neben der Anordnung des Drucksensors auch zur Unterbringung einer für den Betrieb des Drucksensors erforderlichen Steuereinheit und ggfs. Auswerteeinheit genutzt werden kann. Weil sowohl die Steuereinheit und die Auswerteeinheit, üblicherweise ein Mikroprozessor oder Mikrokontroller nebst entsprechenden Peripherieeinheiten, in unmittelbarer Nähe zum Drucksensor angeordnet sein kann, lässt sich hierbei eine besonders schnelle Datenübertragung realisieren.

Die beschriebene Anordnung ermöglicht es beispielsweise, jedem Drucksensor eine eigene Steuereinheitoder/und Auswerteeinheit zuzuordnen, was eine schnelle und störungsfreie Erfassung des Drucks in jedem einer jeweiligen Flüssigkeitsdosiereinheit zugeordneten Hohlraum ermöglicht. Sofern es in manchen Fällen sinnvoll erscheinen mag. einer Gruppe von Flüssigkeitsdosiereinheiten eine gemeinsame Steuereinheit oder/und Auswerteeinheit zuzuordnen, ist es auch möglich, eine Mehrzahl von Drucksensoren zu einer Gruppe zusammenzufassen, der jeweils eine eigene Steuereinheit oder/und Auswerteeinheit zugeordnet ist.

Der Drucksensor kann zum Beispiel eine die zweite Öffnung überdeckende Membran umfassen. Mittels einer Membran ist beispielsweise problemlos ein Differenzdrucksensor realisierbar, da der Spannungszustand einer elastisch gespannten Membran von der Druckdifferenz zwischen den beiden Flachseiten der Membran abhängt.

Die Probenbehandlungsanordnung gemäß der Erfindung ist insbesondere für Flüssigkeitsdosierungsvorrichtungen, insbesondere Pipettiervorrichtungen, anwendbar und beansprucht daher Schutz auch für solche Flüssigkeitsdosierungsvorrichtungen, bzw. Pipettiervorrichtungen. Insbesondere soll die Probenbehandlungsanordnung gemäß der Erfindung bei automatisierten Pipettiervorrichtungen Anwendung finden, bei denen in einem jeweiligen Durchlauf ohne einen Eingriff einer Bedienungsperson zahlreiche Pipettiervorgänge zeitlich parallel zueinander ablaufen und nach Beendigung eines Durchlaufes jeweils automatisch ein neuer Durchlauf durchgeführt wird.

Die vorliegende Erfindung wird im folgenden anhand der beiliegenden Zeichnungen näher erläutert werden. Es stellt dar:
- Figur 1:: eine schematische Darstellung einer als Pipettiervorrichtung ausgebildeten Flüssigkeitsdosiervorrichtung des Standes der Technik,
- Figur 2:: in schematischer und stark vereinfachter Ansicht die Anordnung von mehreren Pipettiereinheiten (Pipettierkanälen) in einer Mehrfach-Probenbehandlungsanordnung für eine Pipettiervorrichtung, und
- Figur 3:: in einer Schnittansicht einen Ausschnitt einer Probenbehandlungsanordnung gemäß einer Ausführungsform der vorliegenden Erfindung.

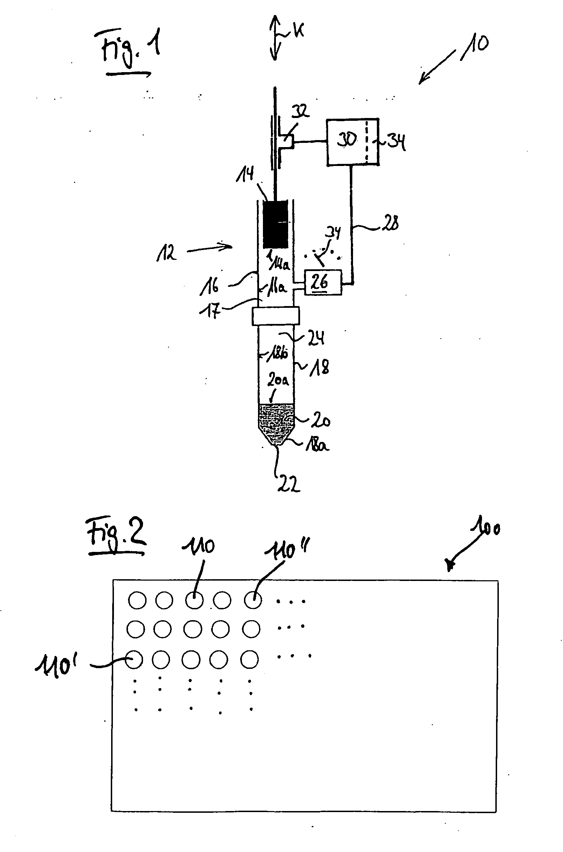

In Figur 1 ist eine als Pipettiereinheit ausgebildete Flüssigkeitsdosiervorrichtung des Standes der Technik allgemein mit 10 bezeichnet. Die Pipettiereinheit 10 umfasst ein Kolben-Zylinder-System 12 mit einem Kolben 14, welcher in einem Zylinder 16 in Richtung des Doppelpfeils K beweglich geführt ist.

Am Zylinder 16 ist eine auswechselbare Pipettierspitze 18 aufgenommen, in welcher eine Flüssigkeit 20 vorhanden ist. Die Pipettierspitze 18 umschließt zusammen mit dem Zylinder 16 und dem Kolben 14 einen Hohlraum 17, welcher (in dem in Figur 1 gezeigten Zustand bei erfolgter Aspiration) zumindest teilweise mit der Flüssigkeit 20 gefüllt ist. Der Zylinder 16, der Kolben 14 und die Pipettierspitze 18 bilden daher ein die Flüssigkeit 20 aufnehmendes Gefäß.

An dem zylinderfernen Längsende 18a weist die Pipettierspitze 18 eine Öffnung 22 auf, durch welche hindurch die Flüssigkeit 20 in die Pipettierspitze 20 aufgenommen wurde und aus dieser wieder abgegeben werden kann. Die Öffnung 22 bildet eine erste Öffnung im Sinne der vorliegenden Erfindung.

Der Kolben 14 liegt im Wesentlichen gasdicht an der Innenwand 16a des Zylinders 16 an. Die zur Pipettierspitze 18 hin weisende Kolbenfläche 14a bildet eine Gefäßbegrenzungswand.

Zwischen der Flüssigkeitsoberfläche 20, der Kolbenfläche 14a, der Zylinderinnenwand 16a und der Innenwand 18b der Pipettierspitze istein Gas 24, etwa Luft, eingeschlossen. Statt Luft kann auch ein beliebiges-anderes Gas verwendet werden, etwa Stickstoff oder ein Edelgas, falls Reaktionen mit der aufzunehmenden Flüssigkeit 20 auf jeden Fall vermieden werden sollen.

Die Flüssigkeit 20 wurde in an sich bekannter Weise durch Eintauchen-der Öffnung 22 in einen Flüssigkeitsvorrat und Bewegen des Kolbens 14 bei eingetauchter Öffnung derart, dass sich der Hohlraum 17 vergrößert und damit das Volumen des eingeschlossenen-Gases 24 vergrößert wird, durch die Öffnung 22 in die Pipettierspitze 18 eingesaugt. Die-Pipettierspitze 18 von Figur 1 hat die Flüssigkeitsaufnahme (Aspiration) bereits abgeschlossen und ist nicht mehr in den Flüssigkeitsvorrat getaucht.

Ein Drucksensor 26 zur Erfassung des Gasdrucks des eingeschlossenen Gases 24 steht mit dem Innenraum des Gefäßes in Verbindung. Da die Pipettierspitze 18 regelmäßig ausgetauscht wird, ist es vorteilhaft, den Drucksensor 26 an dem im Gegensatz zur Pipettierspitze 18 nicht wechselbaren Zylinder 16 vorzusehen und dauerhaft zu betreiben.

Der Drucksensor 26 erfasst den Druck des Gases 24 und liefert ein den Gasdruck repräsentierendes Signal über die Leitung 28 an eine Steuer/Regeleinrichtung 30, welche u.a. dazu ausgebildet ist, einen Antrieb 32 zur Verlagerung des Kolbens 14 in Richtung des Doppelpfeils K in Abhängigkeit eines von dem Drucksensor 26 gelieferten Signals zu betreiben.

Der Drucksensor 26 kann dabei einen Absolutwert des Drucks des Gases 24 oder kann einen Relativwert, etwa bezogen auf den Umgebungsdruck, an die Steuer/Regeleinrichtung 30 liefern. Der vom Drucksensor 26 erfasste und an die Steuer/Regeleinrichtung 30 gelieferte Druckwert ist durch einen Zeiger 34 angedeutet.

Die Steuer/Regeleinrichtung 30 kann noch weitere Funktionen haben. Sie kann etwa eine Überwachung darauf durchführen, ob während des Pipettiervorgangs immer plausible Druckwerte auftreten, und ggfs. Pipettiervorgänge, die irregulär verlaufen, ausschließen. Dies ist z.B. in der EP 1 412 759 B1 beschrieben, auf die in diesem Zusammenhang ausdrücklich verwiesen wird.

Häufig kommt es vor, dass eine Pipettiereinheit, wie sie in Figur 1 schematisch dargestellt ist, nicht als Einzeleinheit zum in der Regel manuellen Dosieren einer Flüssigkeit Verwendung findet. Gerade in jüngerer Zeit trat mit der Entwicklung von leistungsfähigen automatisierten Pipettiervorrichtungen gerade im Zusammenhang mit zahlreichen Anwendungen, die eine massenhafte Untersuchung bzw. Behandlung von Proben erfordern, immer mehr die Anforderung in den Vordergrund, nicht mehr nur einzelne Dosierungsvorgänge nacheinander ausführen zu können, sondern es sollten möglichst in einem Arbeitsgang viele Dosierungsvorgänge gleichzeitig abgewickelt werden können. Zu diesem Zweck wurden für automatisierte Pipettiervorrichtungen Mehrfach-Probenbehandlungsanordnungen entwickelt, bei denen an einem einzelnen Manipulationsglied (z.B. am Arm eines Pipettierroboters) eine Probenbehandlungsanordnung bzw. ein Probenbehandlungskopf befestigt ist, die über eine Mehrzahl von Einzelpipettiereinheiten verfügt, welche jeweils einen Aufbau nach der in Figur 1 gezeigten schematischen Anordnung aufweisen.

Bei Mehrfach-Probenbehandlungsanordnungen sind die einzelnen Pipettiereinheiten in der Regel in Form eines rechteckigen Feldes in Reihen und Spalten angeordnet, wobei die einzelnen benachbarten Pipettiereinheiten jeweils einen gleichen Abstand zueinander haben. Die Abstände zwischen den in einer Reihe nebeneinander liegenden Pipettiereinheiten, insbesondere zwischen deren ersten Öffnungen zur Aufnahme bzw. zur Abgabe von Flüssigkeit, und die entsprechenden Abstände zwischen den in einer Spalte nebeneinander liegenden Pipettierieinheiten sind jeweils gleich groß. In der Regel ist der reihenweise gemessene Abstand gleich groß wie der spaltenweise gemessene Abstand. Eine solche Mehrfach-Probenbehandlungsanordnung bzw. Mehrfach-Pippetierkopf ist in vereinfachter und schematischer Weise in Figur 2 in einer Ansicht auf ihre Unterseite angedeutet. Die Probenbehandlungsanordnung 100 ist in Figur 2 schematisch als Rechteck zu sehen. Die einzelnen Pipettereinheiten 110, 110', 110" (die in Figur 2 mit analogen Bezugszeichen zur Pipettiereinheit 10 gemäß Figur 1 bezeichnet sind und von denen überdies lediglich einige ausgewählte beispielhaft bezeichnet sind) sind durch Kreise angedeutet. Man beachte, dass in Fig. 2 nicht alle Pipettiereinheiten eingezeichnet sind, sondern sich diese sowohl nach rechts als auch nach unten noch fortsetzen. So können in solchen Mehrfach-Probenbehandlungsanordnungen bzw. Mehrfach-Pipettierköpfen gemäß Figur 2 z.B. 8 Reihen mit je 12 Pipettiereinheiten und damit insgesamt 96 Pipettiereinheiten vorgesehen sein, oder aber es können 12 Reihen mit je 32 Pipettiereinheiten (insgesamt 384 Pipettiereinheiten) oder aber sogar 32 Reihen mit je 48 Pipettiereinheiten (insgesamt 1536 Pipettiereinheiten) vorgesehen sein und damit entsprechend viele Flüssigkeitsdosierungsvorgänge gleichzeitig durchgeführt werden.

Damit stellt sich jedoch die Anforderung, wie bei einer derart hohen Zahl von nebeneinander anzuordnenden Pipettiereinheiten noch eine Überwachung des Drucks im Pipettierraum, wie es gemäß den oben genannten Anwendungen eigentlich erwünscht wäre, erfasst werden kann. Hierzu ist zu berücksichtigen, dass diese Anwendungen sämtlich die Erfassung des Drucks in der jeweiligen Pipettiereinheit unabhängig und separat von den anderen Pipettiereinheiten erforderlich machen. Es ist somit erforderlich, eine sehr große Anzahl von Drucksensoren nebst zugehöriger Elektronik zur Auswertung und Ansteuerung derselben auf engstem Raum nebeneinander anzuordnen.

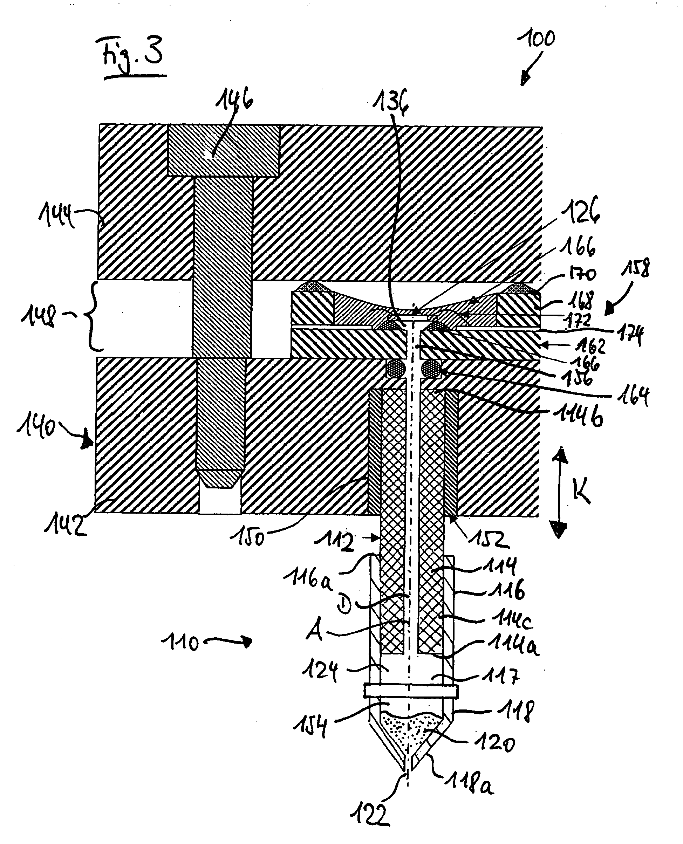

Figur 3 zeigt in einer Querschnittsansicht einen Ausschnitt einer Probenbehandlungsanordnung (bzw. eines Pipettierkopfes) 100 gemäß einer Ausführungsform der vorliegenden Erfindung zum Einbau in eine automatisiert arbeitende Pipettiervorrichtung. Der in Figur 3 gezeigte Ausschnitt zeigt dabei eine der Mehrzahl von Pipettiereinheiten 110, die in der Probenbehandlungsanordnung 100 vorgesehen sind. Die Pipettiereinheit 110 kann dabei hinsichtlich ihrer funktionalen Komponenten analog zu der bereits in Figur 1 schematisch gezeigten Pipettiereinheit 10 aufgebaut sein. Im Folgenden werden daher solche Komponenten, die bereits in Figur 1 gezeigten Komponenten entsprechen, mit denselben Bezugszeichen, jeweils vermehrt um 100, bezeichnet und lediglich insoweit näher erläutert, als sie sich von der Ausführungsform gemäß Figur 1 unterscheiden, auf die ansonsten verwiesen sei.

Der wesentliche Gesichtspunkt liegt bei der Probenbehandlungsanordnung 100 bzw. speziell der Pipettiereinheit 110 in der Anordnung des Kolben-/Zylindersystems 112 und des Drucksensors 126 sowie in der Anbringung des Kolben/Zylindersystems 112 an der unteren Trägerplatte 142 einer Trägervorrichtung 140 derart, dass das Zylinderelement (gebildet durch den Pipettierzylinder 116 mit daran angebrachter Pipettierspitze 118) relativ zu der Trägervorrichtung 140 bewegbar ist (siehe den Doppelpfeil K). Die Trägervorrichtung 140 umfasst eine untere Trägerplatte 142 und eine obere Trägerplatte 144, die durch jeweilige Schraubbolzen 146 zusammengehalten sind. Zwischen der unteren Trägerplatte 142 und der oberen Trägerplatte 144 ist ein Zwischenraum 148 freigelassen.

Im Folgenden soll diese Anordnung anhand des in Figur 3 gezeigten Ausschnitts näher beschrieben werden, wobei es sich versteht, dass an der Trägervorrichtung 140 eine Mehrzahl von Pipettiereinheiten 110 in der in Figur 3 gezeigten Weise angeordnet sind.

In der Unterseite der unteren Trägerplatte 142 befindet sich eine Ausnehmung 150, in die eine Hülse 152 eingesetzt ist. In die Hülse 152 ist wiederum das Kolbenelement 114 des Kolben-/Zylindersystems 112 eingesetzt. Das Kolbenelement 114 ist daher an der unteren Trägerplatte 142 fest und unverrückbar gehalten.

Wie aus Figur 3 ersichtlich ist, ist das Kolbenelement 114 als Hohlkolben ausgebildet, mit einem Mantel 114c, der einen konzentrisch zur Längsachse des Kolbenelements 114 und zur Längsachse A des Kolben-/Zylindersystems 112 verlaufenden Durchgang D umschließt. Der Hohlkolben 114 ist im Wesentlichen fluiddicht in ein Zylinderelement eingesetzt, das gebildet ist aus einem Zylinderkolben 116 mit an dessen vorderem Ende aufgesetzter Pipettenspitze 118. Der gemeinsam mit der Trägervorrichtung 140 bewegbare Hohlkolben 114 verschiebt sich bei Bewegung der Trägervorrichtung 140 (siehe Doppelpfeil K) entlang der Innenwand des Zylinderelelments 116, 118, wobei seine Außenwand an dieser Innenwand abgleitet.

Der Durchgang D des Hohlkolbens 114 mündet auf seiner einen Stirnseite, die der Pipettenspitze 118 mit der darin ausgebildeten ersten Öffnung 122, durch die die zu pipettierende Flüssigkeit 120 aufgenommen bzw. abgegeben wird, zugewandt ist, in einen ersten Teilhohlraum 154. Bei der Anordnung gemäß Figur 3 liegt die Mündung des Druchgangs D in den Teilhohlraum 154 der ersten Öffnung 122 bezogen auf die Längsachse A des Kolben-/Zylindersystems 112 gegenüber.

An seiner anderen Stirnseite mündet der Durchgang D in einen zweiten Teilhohlraum 156. Der zweite Teilhohlraum 156 entsteht dadurch, dass in der unteren Trägerplatte 142 entlang der Zentralachse der Aussparung 150 ein Kanal ausgebildet ist, der einen Durchgang zur Oberseite der unteren Trägerplatte 142 schafft, und an der Oberseite der unteren Trägerplatte 142 direkt über der Mündung des Kanals eine Druckmesseinheit angebracht ist. Die Druckmesseinheit ist damit in dem zwischen den beiden Trägerplatten 142, 144 gebildeten Zwischenraum 148 untergebracht.

Die Druckmesseinheit umfasst ein direkt oberhalb der Mündung des die der Trägerplatte 142 durchbrechenden Kanals angeordnetes Substrat 162 sowie den oberhalb der Substrats angeordneten eigentlichen Drucksensor 126. Das Substrat 162 weist eine Durchbrechung auf, die konzentrisch mit dem Kanal der Trägerplatte 142 angeordnet ist. Der Drucksensor 126 umfasst eine Membran, die die Durchbrechung des Substrats 162 an dessen Oberseite überspannt. Der Drucksensor 126 verschließt damit eine an der Oberseite des Substrats 162 gebildete zweite Öffnung 136.

Das Substrat 162 selbst ist gegenüber der Trägerplatte 142 durch eine O-Ringdichtung 164 fluiddicht abgedichtet. Der Drucksensor 126 ist mittels einer ringförmigen Klebstofflage 166 mit dem Substrat 162 fluiddicht verbunden. Er wird über eine Drucksensorabdeckung 166 und eine Ringplatte 168, die mittels einer weiteren Klebstofflage 170 an der Unterseite der oberen Trägerplatte 144 anliegt, durch Anziehen der Schraubbolzen 146 derart gegen das Substrat gedrückt, dass sowohl zwischen dem Drucksensor 126 und dem Substrat 162 als auch zwischen dem Substrat 162 und der Trägerplatte 142 ein fluiddichter Kontakt entsteht. Damit kann das Fluid 124 nicht aus dem zweiten Teilhohlraum 156 austreten.

Aus Figur 3 ist zudem ersichtlich, dass die zweite Öffnung 136, welche von dem Drucksensor 126 verschlossen ist, bezogen auf die Längsachse des Kolben-/Zylindersystems 112 der ersten Öffnung 122 gegenüberliegt.

Zu erwähnen ist noch, dass die von dem Drucksensor 126 gelieferten Signale über eine Drahtverbindung 172 und eine Leiterplatte 174 zu einer in der Figur nicht gezeigten elektronischen Steuereinheit und elektronischen Verstärkereinheit/Auswerteeinheit übertragen werden. Diese elektronischen Einheiten können ebenfalls in dem Zwischenraum 148 oder ggfs. an der Oberseite der oberen Trägerplatte 144 vorgesehen sein, so dass sich ein kurzer Übertragungsweg für die elektrischen Signale ergibt. Dies führt zum Einen zu verbesserter Qualität der übertragenen Signale und ermöglicht zum Anderen eine schnelle Ansteuerung und Auswertung der Signale durch entsprechende Mikropozessor- oder Mikrokontrollerschaltungen.

## Patentansprüche

1. Probenbehandlungsanordnung (100) für eine Flüssigkeitsdosiervorrichtung, umfassend
wenigstens einen mit einem Fluid (124), dessen Druck zur Aufnahme oder. Abgabe einer zu dosierenden Flüssigkeit (120) veränderbar ist, gefüllten Hohlraum (117), der wenigstens eine erste Öffnung (122) aufweist, durch die die zu dosierende Flüssigkeit (120) aufnehmbar oder abgebbar ist, einen Drucksensor (126), der derart in Verbindung mit dem Hohlraum (117) steht, dass durch den Drucksensor (126) während eines Flüssigkeitsdosierungsvorgangs der Druck des Fluids (124) in dem Hohlraum (117) erfassbar ist,
wobei der Drucksensor (126) eine von der ersten Öffnung (122) verschiedene zweite Öffnung (136) des Hohlraums (117) fluiddicht verschließt, wobei der Hohlraum (117) wenigstens zum Teil gebildet ist durch ein Zylinderelement (116, 118) und ein in das Zylinderelement (116,118) von dessen einem Stirnende (116a) her eingesetztes und relativ zu dem Zylinderelement (116, 118) bewegliches Kolbenelement (114), wobei die erste Öffnung (122) an dem dem einen Stirnende (116a) gegenüber liegenden anderen Stirnende(118a) des Zylinderelementes (116, 118) ausgebildet ist,
**dadurch gekennzeichnet, dass**
das Kolbenelement (114) als Hohlkolben ausgebildet ist mit einem das Kolbenelement (114) durchsetzenden Durchgang (D), der an dem dem anderen Stirnende (118a) des Zylinderelementes (116, 118) zugewandten einen Stirnende (114a) des Kolbenelementes (114) der ersten Öffnung (122) gegenüber liegend in einen ersten Teilhohlraum (154) mündet, wobei entweder
a) der Durchgang (D) an dem von dem anderen Stirnende (118a) des Zylinderelementes (116, 118) abgewandten anderen Stirnende (114b) des Kolbenelementes (114) der zweiten Öffnung (136) gegenüber liegend in einen zweiten Teilhohlraum (156) mündet, so dass die zweite Öffnung (136) in dem Hohlraum (117) der ersten Öffnung (122) im Wesentlichen gegenüber liegend angeordnet ist, oder
b) das von dem anderen Stirnende des Zyünderelementes abgewandte andere Stirnende des Durchgangs die zweite Öffnung ausbildet.

2. Probenbehandlungsanordnung (100) für eine Flüssigkeitsdosiervorrichtung nach Anspruch 1,
**dadurch gekennzeichnet, dass**
eine Mehrzahl von Hohlräumen (117) mit je einer entsprechenden ersten Öffnung (122) vorgesehen sind, wobei jedem der Hohlräume (117) ein mit diesem in Verbindung stehender Drucksensor (126) zugeordnet ist.

3. Probenbehandlungsanordnung (100) für eine Flüssigkeitsdosiervorrichtung nach Anspruch 2,
**dadurch gekennzeichnet, dass**
jeder der Hohlräume (117) eine zweite Öffnung (136) aufweist, die durch einen dem Hohlraum (117) zugeordneten Drucksensor (126) verschlossen ist.

4. Probenbehandlungsanordnung (100) für eine Flüssigkeitsdosiervorrichtung nach Anspruch 2 oder 3,
**dadurch gekennzeichnet, dass**
die Hohlräume (117) nebeneinander in zueinander orthogonalen Reihen und Spalten angeordnet sind, wobei die ersten Öffnungen zweier entlang einer Reihe oder/und Spalte benachbarter Hohlräume (117) jeweils denselben Abstand voneinander aufweisen.

5. Probenbehandlungsanordnung (100) für eine Flüssigkeitsdosiervorrichtung nach einem der vorhergehenden Ansprüche,
**dadurch gekennzeichnet, dass**
der Durchgang (D) konzentrisch zur Längsachse des Kolbenelementes (114) verläuft.

6. Pröbenbehandlungsanordnung (100) für eine Flüssigkeitsdosiervorrichtung nach einem der vorhergehenden Ansprüche,
**dadurch gekennzeichnet, dass**
das Kolbenelement (114) an einer relativ zu dem Zylinderelement (116, 118) bewegbaren Trägervorrichtung (140) befestigt ist, wobei die Trägervorrichtung (140) eine erste Trägerplatte (142) umfasst, an der das Kolbenelement (114) mit im Wesentlichen orthogonal zur Ebene der ersten Trägerplatte (142) stehender Längsachse angebracht ist.

7. Probenbehandlungsanordnung (100) für eine Flüssigkeitsdosiervorrichtung nach Anspruch 6,
**dadurch gekennzeichnet, dass**
die Trägervorrichtung (140) eine zweite Trägerplatte (144) umfasst, die im Wesentlichen parallel zu der ersten Trägerplatte (142) angeordnet ist und mit dieser unter Bildung eines Zwischenraumes (148) verbunden ist, wobei der Drucksensor (126) wenigstens teilweise in dem zwischen der ersten Trägerplatte (142) und der zweiten Trägerplatte (144) ausgebildeten Zwischenraum (148) untergebracht ist.

8. Probenbehandlungsanordnung (100) für eine Flüssigkeitsdosiervorrichtung nach Anspruch 6 oder 7,
**dadurch gekennzeichnet, dass**
dem Drucksensor (126) eine Steuereinheit und ggfs. eine Auswerteeinheit zugeordnet ist, die an der Trägervorrichtung (140) gelagert sind.

9. Probenbehandlungsanordnung (100) für eine Flüssigkeitsdosiervorrichtung nach Anspruch 8,
**dadurch gekennzeichnet, dass**
jedem Drucksensor (126) eine eigene Steuereinheit oder/und Auswerteeinheit zugeordnet sind.

10. Probenbehandlungsanordnung (100) für eine Flüssigkeitsdosiervorrichtung nach Anspruch 8,
**dadurch gekennzeichnet, dass**
eine Mehrzahl von Drucksensoren (126) zu einer Gruppe zusammengefasst sind, der jeweils eine eigene Steuereinheit oder/und. Auswerteeinheit zugeordnet sind.

11. Probenbehandlungsanordnung (100) für eine Flüssigkeitsdosiervorrichtung nach einem der vorhergehenden Ansprüche,
**dadurch gekennzeichnet, dass**
der Drucksensor (126) eine die zweite Öffnung (136) überdeckende Membran umfasst.

12. Flüssigkeitsdosierungsvorrichtung, insbesondere Pipettiervorrichtung, umfassend eine Probenbehandlungsanordnung (100) nach einem der vorangehenden Ansprüche.

## Claims

1. A sample-processing assembly (100) for a fluid-dosing device, comprising
at least one cavity (117) filled with a fluid (124) whose pressure is variable to receive or dispense a liquid (120) to be dosed, which cavity has at least one first opening (122) through which the liquid (120) to be dosed can be received or dispensed, a pressure sensor (126) which is in communication with the cavity (117) in such a way that the pressure of the fluid (124) in the cavity (117) can be detected by the pressure sensor (126) during the fluid-dosing procedure,
wherein the pressure sensor (126) closes fluidtightly a second opening (136) of the cavity (117) different from the first opening (122), wherein cavity (117) is formed at least partly by a cylinder element (116,118) and a piston element (114) which is inserted into the cylinder element (116,118) from its front end (116a) and which is movable relative to the cylinder element (116,118), wherein the first opening (122) is formed at the other front end (118a) of the cylinder element (116,118) situated opposite the front end (116a),
**characterised in that** the piston element (114) is in the form of a hollow piston with a passage (D) which passes through the piston element (114) and which, at the front end (114a) of the piston element (114) nearest the other front end (118a) of the cylinder element (116,118), discharges into a first partial cavity (154) situated opposite the first opening (122), wherein either
a) at the other front end (114a) of the piston element (114) remote from the other front end (118a) of the cylinder element (116,118) the passage (D) discharges into a second partial cavity (156) situated opposite the second opening (136) so that the second opening (136) in the cavity (117) is arranged substantially opposite the first opening (122), or
b) the other front end of the passage remote from the other front end of the cylinder element forms the second opening.

2. A sample-processing assembly (100) for a fluid-dosing device according to Claim 1,
**characterised in that** a plurality of cavities (117) with a respective corresponding first opening (122) is provided, wherein each of the cavities (117) is associated with a pressure sensor (126) in communication therewith.

3. A sample-processing assembly (100) for a fluid-dosing device according to Claim 2,
**characterised in that** each of the cavities (117) has a second opening (136) which is closed by a pressure sensor (126) associated with the cavity (117).

4. A sample-processing assembly (100) for a fluid-dosing device according to Claim 2 or 3,
**characterised in that** the cavities (117) are arranged side by side in rows and columns which are orthogonal to one another, wherein the first openings of two cavities (117), which are adjacent along a row and/or column, each have the same distance from one another.

5. A sample-processing assembly (100) for a fluid-dosing device according to any one of the preceding Claims,
**characterised in that** the passage (D) extends concentrically to the longitudinal axis of the piston element (114).

6. A sample-processing assembly (100) for a fluid-dosing device according to any one of the preceding Claims,
**characterised in that** the piston element (114) is fastened to a support device (140) which can move relative to the cylinder element (116,118), wherein the support device (140) comprises a first support plate (142) on which the piston element (114) is mounted with a longitudinal axis disposed substantially orthogonal to the plane of the first support plate (142).

7. A sample-processing assembly (100) for a fluid-dosing device according to Claim 6,
**characterised in that** the support device (140) comprises a second support plate (144) which is arranged substantially parallel to the first support plate (142) and is connected to the latter to form an intermediate space (148), wherein the pressure sensor (126) is accommodated at least partly in the intermediate space (148) formed between the first support plate (142) and the second support plate (144).

8. A sample-processing assembly (100) for a fluid-dosing device according to Claim 6 or 7,
**characterised in that** the pressure sensor (126) is associated with a control unit and, optionally an evaluation unit, which are mounted on the support device (140).

9. A sample-processing assembly (100) for a fluid-dosing device according to Claim 8,
**characterised in that** each pressure sensor (126) is associated with its own control unit and/or evaluation unit.

10. A sample-processing assembly (100) for a fluid-dosing device according to Claim 8,
**characterised in that** a plurality of pressure sensors (126) are combined to form a group, which are each associated with their own control unit and/or evaluation unit.

11. A sample-processing assembly (100) for a fluid-dosing device according to any one of the preceding Claims,
**characterised in that** the pressure sensor (126) comprises a membrane covering the second opening (136).

12. A fluid-dosing device, in particular a pipetting device, comprising a sample-processing assembly (100) according to any one of the preceding Claims.

## Revendications

1. Agencement de traitement d'échantillons (100) pour un dispositif de dosage de liquides comprenant
au moins un espace creux (117) rempli d'un fluide (124) dont la pression d'admission ou de distribution d'un liquide à doser (120) peut être modifiée, qui présente au moins une première ouverture (122) par laquelle le liquide à doser (120) peut être admis ou distribué,
un capteur de pression (126) qui est relié avec l'espace creux (117) de telle sorte que la pression du liquide (124) dans l'espace creux (117) puisse être captée par le capteur de pression (126) pendant un processus de dosage de liquide,
dans lequel le capteur de pression (126) ferme de façon étanche aux liquides une deuxième ouverture (136) de l'espace creux (117) différente de la première ouverture (122), l'espace creux (117) étant formé au moins en partie par un élément cylindrique (116, 118) et un élément de piston (114) inséré dans l'élément cylindrique (116, 118) depuis une extrémité frontale (116a) de celui-ci et mobile par rapport à l'élément cylindrique (116, 118), la première ouverture (122) étant formée sur l'autre extrémité frontale (118a) opposée à une extrémité frontale (116a) de l'élément cylindrique (116, 118),
**caractérisé en ce que**
l'élément de piston (114) est conçu comme un piston creux doté d'un passage (D) traversant l'élément de piston (114) qui débouche sur une extrémité frontale (114a) de l'élément de piston (114) de la première ouverture (122) orientée vers l'autre extrémité frontale (118a) de l'élément de cylindre (116, 118), opposée dans un premier espace creux partiel (154), dans lequel soit
a) le passage (D) débouche sur l'autre extrémité frontale (114b) de l'élément de piston (114) de la deuxième ouverture (136) détournée de l'autre extrémité frontale (118a) de l'élément cylindrique (116, 118), opposée dans un deuxième espace creux partiel (156), de sorte que la deuxième ouverture (136) soit disposée dans l'espace creux (117) de la première ouverture (122) de façon substantiellement opposée, soit
b) l'autre extrémité frontale détournée de l'autre extrémité frontale de l'élément cylindrique constitue la deuxième ouverture.

2. Agencement de traitement d'échantillons (100) pour un dispositif de dosage de liquides selon la revendication 1, **caractérisé en ce que**
une pluralité d'espaces creux (117) est dotée respectivement d'une première ouverture correspondante (122), dans lequel à chacun des espaces creux (117) est attribué un capteur de pression (126) se trouvant en relation avec celui-ci.

3. Agencement de traitement d'échantillons (100) pour un dispositif de dosage de liquides selon la revendication 2, **caractérisé en ce que**
chacun des espaces creux (117) présente une deuxième ouverture (136) qui est fermée par un capteur de pression affecté à l'espace creux.

4. Agencement de traitement d'échantillons (100) pour un dispositif de dosage de liquides selon la revendication 2 ou 3, **caractérisé en ce que**
les espaces creux (117) sont disposés côte à côte en rangées et en colonnes orthogonales les unes par rapport aux autres, les premières ouvertures de deux espaces creux (117) voisins le long d'une rangée et/ou d'une colonne présentant respectivement le même intervalle l'une par rapport à l'autre.

5. Agencement de traitement d'échantillons (100) pour un dispositif de dosage de liquides selon l'une des revendications précédentes, **caractérisé en ce que**
le passage (D) évolue sur le plan concentrique par rapport à l'axe longitudinal de l'élément de piston (114).

6. Agencement de traitement d'échantillons (100) pour un dispositif de dosage de liquides selon l'une des revendications précédentes, **caractérisé en ce que**,
l'élément de piston (114) est fixé sur un dispositif de support (140) mobile par rapport à l'élément cylindrique (116, 118), le dispositif de support (140) comprenant une première plaque de support (142) sur laquelle l'élément de piston (114) est monté, l'axe longitudinal se trouvant substantiellement sur un plan orthogonal par rapport au plan de la première plaque de support (142).

7. Agencement de traitement d'échantillons (100) pour un dispositif de dosage de liquides selon la revendication 6, **caractérisé en ce que**
le dispositif de support (140) comprend une deuxième plaque de support (144) qui est disposée substantiellement en parallèle par rapport à la première plaque de support (142) et est liée avec celle-ci en formant un espace intermédiaire (148), le capteur de pression (126) étant logé au moins en partie dans l'espace intermédiaire (148) formé entre la première plaque de support (142) et la deuxième plaque de support (144).

8. Agencement de traitement d'échantillons (100) pour un dispositif de dosage de liquides selon la revendication 6 ou 7, **caractérisé en ce que**
au capteur de pression (126) est ajoutée une unité de commande et éventuellement une unité d'évaluation qui est stockée sur le dispositif de support (140).

9. Agencement de traitement d'échantillons (100) pour un dispositif de dosage de liquides selon la revendication 8, **caractérisé en ce que**
à chaque capteur de pression (126) est affectée une unité de commande individuelle et/ou une unité d'évaluation individuelle.

10. Agencement de traitement d'échantillons (100) pour un dispositif de dosage de liquides selon la revendication 8, **caractérisé en ce que**
une pluralité de capteurs de pression (126) est aménagée en un groupe, ceux-ci étant affectés respectivement à une unité de commande propre et/ou une unité d'évaluation propre.

11. Agencement de traitement d'échantillons (100) pour un dispositif de dosage de liquides selon l'une des revendications précédentes, **caractérisé en ce que**
le capteur de pression (126) comprend une membrane recouvrant la deuxième ouverture (136).

12. Dispositif de dosage de liquides, en particulier, dispositif de pipetage, comprenant un dispositif de traitement d'échantillon (100) selon l'une des revendications précédentes.
